# EUROPÄISCHE PATENTSCHRIFT

(11) **EP 0 631 044 B1**
(45) Veröffentlichungstag und Bekanntmachung des Hinweises auf die Patenterteilung: **02.10.1996**
(21) Anmeldenummer: 94108119.2
(22) Anmeldetag: 26.05.1994
(51) Int. Cl.: F02M 37/22, B01D 35/30

(54) **Flüssigkeitsfilter für Dieselkraftstoff**
Filter for diesel fuel
Filtre pour gazole

(30) Priorität: 25.06.1993 DE 4321171
(43) Veröffentlichungstag der Anmeldung: 28.12.1994
(73) Patentinhaber: ROBERT BOSCH GMBH, 70442 Stuttgart (DE)
(72) Erfinder: Straubel, Max, Dr. Dipl.-Ing., D-70329 Stuttgart (DE); Granda-Trigo, Miguel, Dipl.-Ing., E-28037 Madrid (ES); Projahn, Ulrich, Dr.-Ing., E-28109 El Soto (Madrid) (ES); Lucas, Bernhard, Dipl.-Ing., E-28034 Madrid (ES)

(56) Entgegenhaltungen:
- EP-A- 0 106 736
- EP-A- 0 360 973
- EP-A- 0 589 377
- FR-A- 1 385 489
- FR-A- 2 613 431
- US-A- 4 539 108
- US-A- 4 857 189

## Beschreibung

### Stand der Technik

Die Erfindung geht aus von einem Flüssigkeitsfilter für Dieseikraftstoff nach der im Oberbegriff des Anspruchs 1 näher angegebenen Gattung.

Ein solches Flüssigkeitsfilter für Dieselkraftstoff ist bereits aus der US-PS 4 539 108 bekannt, bei dem eine Filterbox lösbar an einem Filterkopf befestigt ist. Dabei weist der Filterkopf einen einzigen Gehäusedeckel auf, in dem die Funktionen Handpumpe und elektrische Heizeinrichtung integriert sind. Zudem sind am Gehäusedeckel neben den Anschlüssen für Zulauf und Ablauf auch ein Lochflansch ausgebildet, um das Flüssigkeitsfilter an einem Maschinenbauteil zu befestigen. Auch der elektrische Anschluß für die Heizeinrichtung ist im Gehäusedeckel ausgebildet. Von Nachteil bei diesem Flüssigkeitsfilter ist nun, daß bei dieser Integration aller Funktionen der Gehäusedeckel relativ groß und aufwendig baut. Um den mechanischen Beanspruchungen standzuhalten, besteht der Gehäusedeckel aus Metall, was zu einer relativ kostspieligen Herstellung führt. Der metallische Gehäusedeckel führt wiederum zu einer aufwendigeren Bauweise der Heizung, deren elektrische Heizelemente isoliert vom metallischen Gehäusedeckel angeordnet werden müssen. Insgesamt führt dies zu einer unflexiblen und schlecht anpaßbaren Bauweise des Filterkopfes, der sich auch schlecht für eine Modulbauweise eignet.

Ferner ist aus der US-A-4 857 189 ein Flüssigkeitsfilter bekannt, bei dem an einem Filterkopf eine Filtervorrichtung mittels einer Steckverbindung in Form eines Bajonettverschlusses lösbar befestigt ist. Dabei weist der Filterkopf einen Befestigungsflansch zur Befestigung des Flüssigkeitsfilters an einem Maschinenbauteil und einen am Befestigungsflansch angebauten Gehäusemodul mit radial angeordneten Zulauf- und Ablaufanschlüssen auf. Gehäusemodul und Befestigungsflansch sind hier miteinander verschraubt und bilden so keine schnell lösbare Steckverbindung. Dabei ist die Filtervorrichtung so ausgebildet, daß sie mit ihrem Steckeranschluß den Befestigungsflansch durchdringt und abdichtend in den Gehäusemodul ragt. Bei diesem Flüssigkeitsfilter fehlen eine Handpumpe und eine elektrische Heizeinrichtung im Filterkopf. Auch läßt sich der Gehäusemodul nicht unabhängig von der Filtervorrichtung leicht austauschen. Ferner können hier störende Kräfte von der Filtervorrichtung in den Gehäusemodul übertragen werden.

### Vorteile der Erfindung

Das erfindungsgemäße Flüssigkeitsfilter für Dieselkraftstoff mit den kennzeichnenden Merkmalen des Hauptanspruchs hat demgegenüber den Vorteil, daß sie eine relativ einfache und kostengünstige Bauweise ermöglicht, die zudem durch ihre äußerst raumsparende Form vielseitige Einsatzmöglichkeiten eröffnet. Durch die Integration von Handpumpe und elektrischer Heizeinrichtung in einem Gehäusemodul, an dem außen zusätzlich radial die fluidischen und elektrischen Anschlüsse angeordnet sind, läßt sich eine hohe Funktionsdichte auf engstem Raum erreichen, wobei der Gehäusemodul leicht austauschbar ist. Der Befestigungsflansch kann zum Übertragen mechanischer Kräfte auf ein Maschinenteil bei kompakter Bauweise stabil ausgeführt werden.

Durch die in den Unteransprüchen aufgeführten Maßnahmen sind vorteilhafte Weiterbildungen und Verbesserungen des im Hauptanspruch angegebenen Flüssigkeitsfilters möglich. Dabei wird eine kostengünstige und bauraumsparende Weise durch die Merkmale des Anspruchs 2 unterstützt. Vorteilhaft ist es, wenn gemäß Anspruch 3 unterschiedliche Materialien für den Befestigungsflansch und den Gehäusemodul mit seiner Heizeinrichtung verwendet werden können. Besonders zweckmäßig ist es, wenn dabei in den Gehäusemodul gemäß Anspruch 4 eine Entlüftungseinrichtung integriert wird. Weitere zweckmäßige Ausgestaltungen ergeben sich aus den übrigen Ansprüchen, die eine einfache, kompakte und billige Bauweise begünstigen.

### Zeichnung

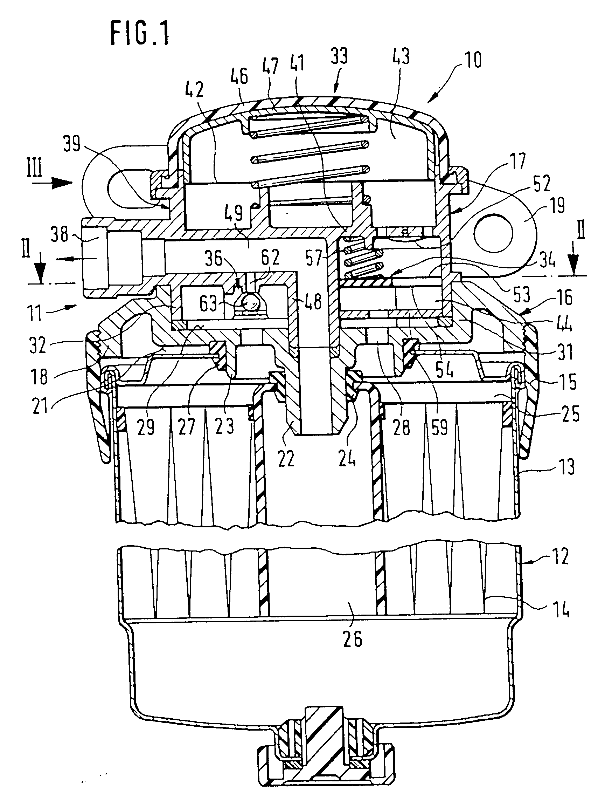

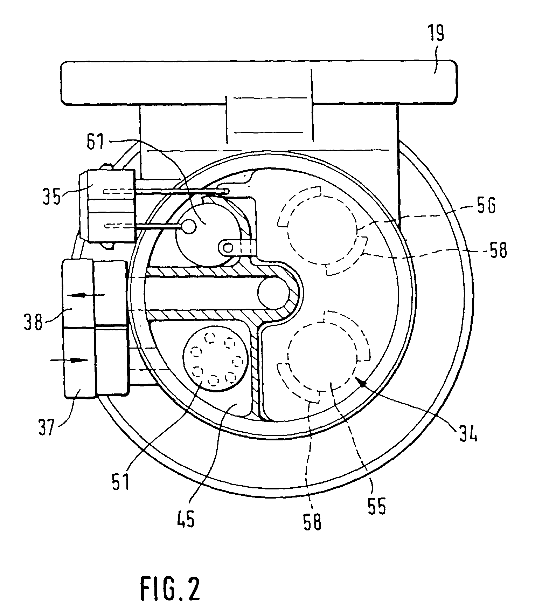

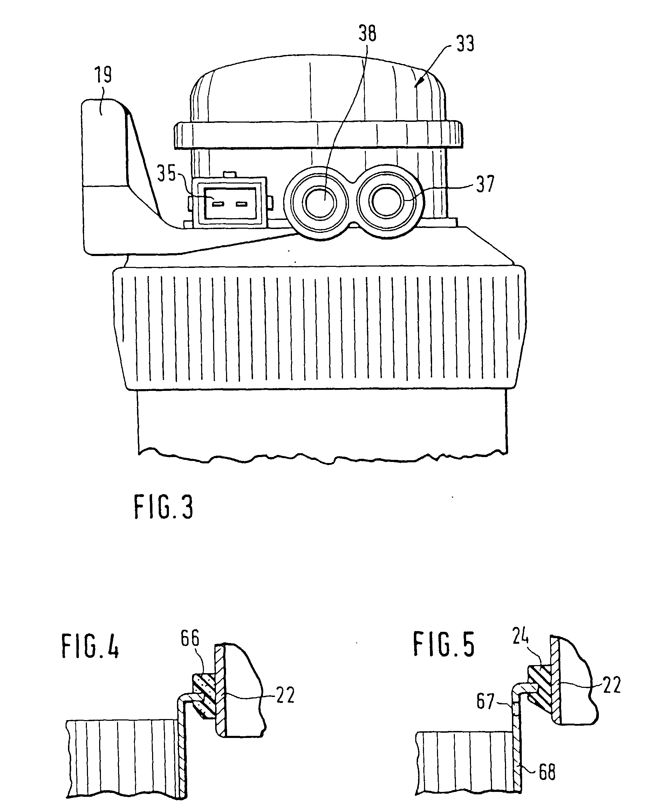

Ein Ausführungsbeispiel der Erfindung ist in der Zeichnung dargestellt und in der nachfolgenden Beschreibung näher erläutert. Es zeigen Figur 1 einen Längsschnitt durch das Flüssigkeitsfilter für Dieselkraftstoff in vereinfachter Darstellung, Figur 2 einen teilweisen Querschnitt nach II-II in Figur 1, Figur 3 eine Teilansicht des Flüssigkeitsfilters nach Figur 1 nach Pfeilrichtung III und die Figuren 4 und 5 jeweils eine Variante einer Entlüftungseinrichtung im Flüssigkeitsfilter in vereinfachter Darstellung.

### Beschreibung des Ausführungsbeispiels

Die Figur 1 zeigt in vereinfachter Darstellung einen Längsschnitt durch ein Flüssigkeitsfilter 10, das im wesentlichen aus einem Filterkopf 11 und einer daran lösbar befestigten Filtervorrichtung 12 besteht. Die Filtervorrichtung 12 ist hier als Boxfilter ausgebildet, das in einem Filtergehäuse 13 ein axial durchströmtes Wickelelement 14 aufnimmt. Das Boxfilter 12 wird mit Hilfe eines über das Filtergehäuse 13 aufgeschobenen Überwurfringes 15 am Filterkopf 11 lösbar festgeschraubt.

Der Filterkopf 11 ist im wesentlichen zweiteilig ausgebildet und besteht aus einem Befestigungsflansch 16 und einem daran angebauten Gehäusemodul 17.

Der Befestigungsflansch 16 besteht aus einem im wesentlichen scheibenförmigen Deckelteil 18, an dessen Außendurchmesser ein Gewinde zur Befestigung des Überwurfringes 15 angeordnet ist und aus einem seitlich am Deckelteil 18 angeformten Flanschteil 19, wie dies besonders deutlich aus Figur 2 und Figur 3 erkennbar ist. Auf einer dem Boxfilter 12 zugewandten Anbaufläche 21 weist das Deckelteil 18 zwei konzentrisch zueinander angeordnete Rohrstutzen 22, 23 auf, von denen der innere Rohrstutzen 22 im Durchmesser kleiner ist und den äußeren Rohrstutzen 23 überragt. Ein innerer Dichtring 24 des Boxfilters 12 ist auf den inneren Rohrstutzen 22 aufgeschoben und trennt dadurch eine Schmutzseite 25 von einer Reinseite 26. Ein äußerer Dichtring 27 des Boxfilters 12 liegt am äußeren Rohrstutzen 23 an und dichtet die Schmutzseite 25 nach außen hin ab. Im Bereich zwischen den beiden Rohrstutzen 22, 23 sind im Deckelteil 18 Einlaßöffnungen 28 ausgebildet. Das Deckelteil 18 weist auf seiner zur Anbaufläche 21 entgegengesetzt liegenden Seite eine Montagefläche 29 auf, in der ein Buchsenanschluß 31 für eine Steckverbindung ausgebildet ist. In diesem Buchsenanschluß 31 wird der Gehäusemodul 17 mit seinem Steckeranschluß 32 eingebaut, wobei die Steckverbindung mit einer nicht näher gezeichneten, an sich bekannten Schnappverbindung ausgebildet werden kann. Der Befestigungsflansch 16, der relativ einfach und kompakt baut, ist zur Aufnahme und Weiterleitung von mechanischen Kräften als Metallteil ausgebildet, und besteht insbesondere aus Aluminium.

Wie die Figur 1 in Verbindung mit Figur 2 und Figur 3 näher zeigt, sind in dem in den Befestigungflansch 16 eingesteckten Gehäusemodul 17 eine Vielzahl von Funktionen integriert. Im Gehäusemodul 17 sind eine Handhilfspumpe 33, eine elektrische Heizungseinrichtung 34 mit einem zugehörigen elektrischen Steckanschluß 35, eine Entlüftungseinrichtung 36 sowie die Anschlüsse für Zulauf 37 und Ablauf 38 angeordnet.

Wie die Figur 1 in Verbindung mit Figur 2 näher zeigt, weist der Gehäusemodul 17 ein im wesentlichen hohlzylindrisches Gehäuse 39 auf, das aus Kunststoff besteht. In dem Gehäuse 39 verläuft quer zur Längsachse des Flüssigkeitsfilters 10 eine Trennwand 41, die einen zur oberen Stirnseite 42 hin offenen Pumpenraum 43 von einem zur unteren Stirnseite und damit zum Steckeranschluß 32 hin liegenden Heizungsraum 44 und einem Einlaßraum 45 trennt. Die obere Stirnseite 42 ist nach außen hin durch eine Membran 46 abgedichtet, welche an einem Pumpenkolben 47 anliegt und die gesamte Stirnseite 42 überspannt. Im Bereich des Steckeranschlusses 32 weist das Gehäuse 39 einen zentrisch angeordneten Rohrstutzen 48 auf, welcher in den inneren Rohrstutzen 22 des Befestigungsflansches 16 ragt und der über einen radial verlaufenden Rohrstutzen 49 mit dem Ablaufanschluß 38 Verbindung hat. Wie insbesondere Figur 2 näher zeigt, steht der Zulaufanschluß 37 mit dem Einlaßraum 45 in Verbindung, von dem Druckmittel über ein Saugventil 51 in den Pumpenraum 43 gelangen kann. Aus dem Pumpenraum 43 kann Flüssigkeit über ein Druckventil 52, wie aus Figur 1 erkennbar, in den Heizungsraum 44 gelangen. In den Heizungsraum 44 sind vom Steckeranschluß 32 her zwei elektrisch leitende, etwa halbkreisförmige Kontaktscheiben 53, 54 eingebaut, zwischen denen zwei scheibenförmige PTC-Heizelemente 55, 56 liegen. Die obere Kontaktscheibe 53 wird von einer Feder 57 belastet, die sich an der Trennwand 41 abstützt. Die untere Kontaktscheibe 54 stützt sich auf Stegen 58 auf, die von einer Stützplatte 59 her nach oben ragen. Die im Querschnitt kreissegmentförmigen Stege 58 durchdringen dabei entsprechende Aussparungen in der unteren Kontaktscheibe 54 und umgreifen dadurch die scheibenförmigen PTC-Heizelemente 55, 56, so daß diese gegen eine Verschiebung in radialer Ebene gesichert sind. Die Kontaktscheiben 53, 54 sind elektrisch leitend an den Steckanschluß 35 angeschlossen, wobei ein Thermoschalter 61 dazwischengeschaltet ist. Die Kontaktscheiben 53, 54 weisen nicht näher gezeichnete Aussparungen auf bzw. bilden mit der Gehäusewand Spalten, über welche die durch das Druckventil 52 zuströmende Flüssigkeit den Heizungsraum 44 durchströmen und über Öffnungen in der Stützplatte 59 sowie die Einlaßöffnungen 28 auf die Schmutzseite 25 des Boxfilters 12 fließen kann.

Wie insbesondere aus Figur 2 und 3 deutlich hervorgeht, ragen die Anschlüsse für Zulauf und Ablauf 37, 38 sowie der elektrische Steckanschluß 35 in Bezug auf das hohlzylindrische Gehäuse 39 alle auf einer Seite radial nach außen, wobei alle Anschlüsse 35, 37, 38 in einer gleichen Querebene liegen. Unabhängig von diesen Anschlüssen kann daher der am Gehäuse 39 ausgebildete Steckeranschluß 32 einen relativ kleinen Durchmesser aufweisen, der vor allem beträchtlich kleiner ist als der Außendurchmesser des Deckelteils 18 und somit auch der Außendurchmesser des Filtergehäuses 13.

Wie Figur 1 ferner näher zeigt, ist im Gehäusemodul 17 die Entlüftungseinrichtung 36 integriert, wozu in dem radial verlaufenden Rohrstutzen 49 ein Bypaß-Kanal 62 angeordnet ist, über welchen der Heizungsraum 44 mit dem Ablaufanschluß 38 Verbindung hat. Um dabei zu verhindern, daß von der Schmutzseite 25 Teilchen auf die Reinseite 26 mitgeführt werden, ist dem Bypaß-Kanal 62 ein Schwimmer 63 vorgeschaltet, der abhängig vom Stand des Flüssigkeitsspiegels diese Verbindung steuert.

Auf die Wirkungsweise des Flüssigkeitsfilters 10 wird nur soweit eingegangen, als zum Verständnis der Erfindung notwendig ist; dabei wird die Funktion der Handhilfspumpe 33 sowie der elektrischen Heizungseinrichtung 34 als an sich bekannt vorausgesetzt.

Beim Betrieb des Flüssigkeitsfilters 10 gelangt das zu reinigende Fluid, insbesondere Dieselkraftstoff, über den Zulaufanschluß 37 in den Einlaßraum 45 der unmittelbar im Gehäusemodul 17 ausgebildet ist. Von dort strömt das Fluid über das als Rückschlagventil wirkende Saugventil 51 in den Pumpenraum 43 und gelangt weiter über das Druckventil 52 in den Heizungsraum 44. Dort durchströmt es die elektrische Heizungseinrichtung 34, wobei bei Bedarf die Wärme von den Kontaktscheiben 53, 54 wirksam auf das Druckmittel übertragen werden kann, wonach das Fluid über Öffnungen in der Stützplatte 59 und die Einlaßöffnungen 28 in dem Befestigungsflansch 16 auf die Schmutzseite 25 des Boxfilters 12 gelangt. Beim Durchströmen des Wickelelements 14 wird der Kraftstoff gereinigt und gelangt über das Mittelrohr im Boxfilter 12 auf die Reinseite 26 und kann über den inneren Rohrstutzen 22 des Befestigungsflansches 16 in den Rohrstutzen 48 des Gehäusemoduls 17 gelangen und von dort über den radialen Rohrstutzen 49 zum Ablaufanschluß 38 strömen. Auf der Schmutzseite 25 sich ansammelnde Luft kann dabei über die Entlüftungsvorrichtung 36 abgebaut werden, wobei die auf dem Flüssigkeitsspiegel aufschwimmende Kugel 63 bei steigendem Flüssigkeitsstand diesen Bypaßkanal 62 schließlich androsselt bzw. sperrt. Bei Bedarf kann die Handhilfspumpe 33 eingesetzt werden und über das Saugventil 51 vom Zulaufanschluß 37 her angesaugter Kraftstoff über das Druckventil 52 in das Boxfilter 12 und weiter zum Ablaufanschluß 38 gepumpt werden. Zur temperaturabhängigen Beschaltung der Heizungseinrichtung 34 ist der Thermoschalter 61 vorgesehen, der in zweckmäßiger Weise vom ankommenden Kraftstoffstrom umspült wird.

Durch die Integration mehrerer Funktionen in dem einen Gehäusemodul 17, an dem zudem auch sämtliche elektrischen und fluidischen Anschlüsse angeordnet sind, läßt sich der Flüssigkeitsfilter 10 in besonders kostengünstiger und bauraumsparender Weise ausbilden. Durch eine einfache Steckverbindung kann der Gehäusemodul 17 ohne weiteres vom Befestigungsflansch 16 abgenommen und ersetzt werden. Die Ausbildung des Gehäusemoduls in einem Kunststoffgehäuse begünstigt nicht nur eine billige Bauweise, sondern erleichtert auch die Ausbildung und Anordnung der elektrischen Heizeinrichtung. Der mechanischen Kräften ausgesetzte Befestigungsflansch 16 läßt sich auch als Metallteil leicht herstellen und ermöglicht zudem eine einfache und günstige Montage der Filtervorrichtung 12.

Selbstverständlich sind an der gezeigten Ausführungsform Änderungen möglich, ohne vom Gedanken der Erfindung abzuweichen. So lassen sich in der elektrischen Heizungseinrichtung 34 anstelle der gezeigten zwei PTC-Heizelemente auch mehr Heizscheiben anordnen, insbesondere dann, wenn auf einen Thermoschalter 61 verzichtet wird. Die Vorteile des Flüssigkeitsfilters 10 können auch dann ausgenutzt werden, wenn am Filterkopf 11 anstelle des gezeigten Boxfilters 12 ein sogenanntes Gehäusefilter angebaut wird. In der Entlüftungseinrichtung 36 kann auch auf den gezeigten kugeligen Schwimmkörper 63 verzichtet werden und dafür der Bypaßkanal 62 mit einer grobporigen Sintermetallplatte verschlossen werden, um einen Durchtritt von Schmutz zu verhindern. Auch läßt sich die Entlüftungseinrichtung 36 ganz aus dem Gehäusemodul 17 herausnehmen und kann dafür in der Filtervorrichtung 12 selbst integriert werden, wie dies vereinfacht in Figur 4 und Figur 5 dargestellt ist. In Figur 4 wird die Abdichtung zwischen den inneren Rohrstutzen 22 und dem Filtereinsatz durch einen Dichtring 66 aus porösem Dichtgummi vorgenommen, der den Luftdurchtritt zwischen Schmutz- und Reinseite erlaubt. Bei der Entlüftungsvorrichtung nach Figur 5 wird der Luftdurchtritt zwischen Schmutz- und Reinseite durch eine lokal poröse Stelle 67 im Mittelrohr 68 des Filtereinsatzes ermöglicht. Sowohl durch den porösen Dichtring 66 wie auch durch die poröse Stelle 67 läßt sich ein unmittelbarer Schmutzdurchgang auf die Reinseite verhindern, ohne den Luftdurchtritt selbst zu stören.

## Patentansprüche

1. Flüssigkeitsfilter für Dieselkraftstoff, bei dem an einem Filterkopf (11) eine Filtervorrichtung (12) lösbar und dicht angebaut ist, welche Filtervorrichtung (12) in einem Filtergehäuse (13) ein Filterelement (14) aufnimmt und mit seinen der Schmutz- und Reinseite zugeordneten Öffnungen in einer Stirnseite zwischen einen Zulauf- (37) und einen Ablaufanschluß (38) im Filterkopf (11) schaltbar ist, wobei im Filterkopf (11) eine Handpumpe (33) sowie eine elektrische Heizungseinrichtung (34) mit zugehörigem elektrischen Anschluß (35) angeordnet sind und an ihm Befestigungsmittel (19) zum Anbau des Flüssigkeitsfilters (10) an einem Maschinenbauteil ausgebildet sind, dadurch gekennzeichnet, daß der Filterkopf (11) aus einem die Befestigungsmittel (19) aufweisenden Befestigungsflansch (16) und einem daran angebauten Gehäusemodul (17) besteht, daß die Heizungseinrichtung (34), die Handpumpe (33), der Zulauf- (37) und der Ablauf-Anschluß (38) sowie der elektrische Anschluß (35) im Gehäusemodul (17) angeordnet sind und daß die Filtervorrichtung (12) und der Gehäusemodul (17) voneinander unabhängig auf entgegengesetzten Seiten des Befestigungsflansches (16) in lösbarer und die Flüssigkeitsverbindungen bildender Weise angebaut sind, wobei der Gehäusemodul (17) ein im wesentlichen zylindrisches Gehäuse (39) aufweist, an dessen von der Filtervorrichtung (12) abgewandten Stirnseite (42) die Handpumpe (33) mit Membran (46) angeordnet ist, während das Gehäuse (39) mit seiner anderen Stirnseite über eine Steckverbindung aus Steckeranschluß (32) und dazu passendem Buchsenanschluß (31) am Befestigungsflansch (16) befestigt ist und daß am zylindrischen Gehäuse (39) radial die fluidischen und elektrischen Anschlüsse (37, 38, 35) angeordnet sind.

2. Flüssigkeitsfilter nach Anspruch 1, dadurch gekennzeichnet, daß der Außendurchmesser des zylindrischen Gehäuses (39) wesentlich kleiner ist als der Außendurchmesser des Filtergehäuses (13).

3. Flüssigkeitsfilter nach Anspruch 1 oder 2, dadurch gekennzeichnet, daß der Befestigungsflansch (16) aus Metall, insbesondere Aluminium, und das Gehäuse (39) des Moduls (17) aus Kunststoff bestehen.

4. Flüssigkeitsfilter nach einem der Ansprüche 1 bis 3, dadurch gekennzeichnet, daß in dem Gehäusemodul (17) eine Entlüftungseinrichtung (36) angeordnet ist.

5. Flüssigkeitsfilter nach Anspruch 4, dadurch gekennzeichnet, daß die Entlüftungseinrichtung (36) einen Schwimmer (63) aufweist, der abhängig vom Stand eines Flüssigkeitsspiegels im Filter (10) einen Entlüftungskanal (62) auf- bzw. zusteuert.

6. Flüssigkeitsfilter nach einem der Ansprüche 1 bis 5, dadurch gekennzeichnet, daß die Membran (46) der Handpumpe (33) einen flüssigkeitsgefüllten Raum (43) nach außen abdichtet und im wesentlichen die gesamte Stirnseite (42) des Gehäuses (39) überspannt.

7. Flüssigkeitsfilter nach Anspruch 6, dadurch gekennzeichnet, daß im Gehäuse (39) in einer zwischen dessen beiden Stirnseiten liegenden Trennwand (41) der Handpumpe (33) zugeordnete Saug- und Druckventile (51, 52) angeordnet sind, von denen das Saugventil (51) einem Einlaßraum (45) und das Druckventil (52) einem Heizungsraum (44) zugeordnet sind.

8. Flüssigkeitsfilter nach Anspruch 7, dadurch gekennzeichnet, daß in dem Heizungsraum (44) mehrere der Heizungseinrichtung (34) zugeordnete PTC-Heizelemente (55, 56) in axialer Richtung zwischen zwei metallischen Kontaktscheiben (53, 54) gehalten sind, die mit den elektrischen Anschlüssen (35) in Wirkverbindung stehen, während zu deren Halterung in radialer Richtung die Heizelemente (55, 56) am Umfang halternde Stege (58) angeordnet sind, die von einer gehäusefest angeordneten Stützplatte (59) ausgehen und mindestens eine der Kontaktscheiben (53, 54) axial durchdringen.

9. Flüssigkeitsfilter nach einem oder mehreren der Ansprüche 1 bis 8, dadurch gekennzeichnet, daß der Zulauf- (37), der Ablauf-Anschluß (38) und der elektrische Anschluß (35) im Gehäusemodul (17) in der gleichen, radial zur Längsachse des Filters (10) verlaufenden Ebene angeordnet sind, die insbesondere im wesentlichen mittig zwischen den beiden Stirnseiten des Gehäuses (39) liegt.

10. Flüssigkeitsfilter nach einem der Ansprüche 1 bis 9, dadurch gekennzeichnet, daß die Filtervorrichtung (12) mit Hilfe eines über das Filtergehäuse (13) aufgesteckten Überwurfringes (15) lösbar am Befestigungsflansch (16) befestigt ist.

11. Flüssigkeitsfilter nach einem der Ansprüche 1 bis 10, dadurch gekennzeichnet, daß die Filtervorrichtung als Boxfilter (12) ausgebildet ist, die über zwei radial wirkende Dichtringe (24, 27) an zwei konzentrisch am Befestigungsflansch (16) angeordneten Rohrstutzen (22, 23) abgedichtet ist.

## Claims

1. Liquid filter for diesel fuel, in which a filtering device (12) is fitted releasably and leaktightly to a filter head (11), which filtering device (12) accommodates a filter element (14) in a filter housing (13) and can be connected, with its openings assigned to the dirty and the clean side in one end, between an inlet connection (37) and an outlet connection (38) in the filter head (11), and a hand pump (33) and an electric heating device (34) with an associated electrical connection (35) being arranged in the filter head (11) and fixing means (19) for mounting the liquid filter (10) on an engine component being formed on it, characterized in that the filter head (11) comprises a fixing flange (16), the latter having the fixing means (19), and a housing module (17) mounted on the said flange, in that the heating device (34), the hand pump (33), the inlet connection (37), the outlet connection (38) and the electrical connection (35) are arranged in the housing module (17) and in that the filtering device (12) and the housing module (17) are mounted independently of one another on opposite sides of the fixing flange (16) in such a way that they are releasable and form the liquid connections, the housing module (17) having an essentially cylindrical housing (39), at the end (42) of which that is remote from the filtering device (12) the hand pump (33) with the diaphragm (46) is arranged, while the housing (39) is mounted by its other end on the fixing flange (16) via a plug-in connection comprising a plug connector (32) and the mating socket connector (31), and in that the fluid and electrical connections (37, 38, 35) are arranged radially on the cylindrical housing (39).

2. Liquid filter according to Claim 1, characterized in that the outside diameter of the cylindrical housing (39) is significantly smaller than the outside diameter of the filter housing (13).

3. Liquid filter according to Claim 1 or 2, characterized in that the fixing flange (16) is composed of metal, in particular aluminium, and the housing (39) of the module (17) is composed of plastic.

4. Liquid filter according to one of Claims 1 to 3, characterized in that an air outlet device (36) is arranged in the housing module (17).

5. Liquid filter according to Claim 4, characterized in that the air outlet device (36) has a float (63) which opens and closes an air outlet passage (62) as a function of a liquid level in the filter (10).

6. Liquid filter according to one of Claims 1 to 5, characterized in that the diaphragm (46) of the hand pump (33) seals off a liquid-filled space (43) from the outside and spans essentially the entire end (42) of the housing (39).

7. Liquid filter according to Claim 6, characterized in that inlet and discharge valves (51, 52) assigned to the hand pump (33) are arranged in the housing (39) in a dividing wall (41) situated between the two ends of the latter, of which valves the inlet valve (51) is assigned to an inlet space (45) and the discharge valve (52) is assigned to a heating space (44).

8. Liquid filter according to Claim 7, characterized in that a plurality of PTC heating elements (55, 56) assigned to the heating device (34) are held in the heating space (44) in the axial direction between two metallic contact washers (53, 54) which are in effective connection with the electrical connections (35), while, to hold them in the radial direction, webs (58) which hold the heating elements (55, 56) at the periphery are provided, the said webs emanating from a supporting plate (59) arranged in a manner fixed relative to the housing and passing axially through at least one of the contact washers (53, 54).

9. Liquid filter according to one or more of Claims 1 to 8, characterized in that the inlet connection (37), the outlet connection (38) and the electrical connection (35) are arranged in the housing module (17) in the same plane, which extends radially to the longitudinal axis of the filter (10) and, in particular, lies essentially centrally between the two ends of the housing (39).

10. Liquid filter according to one of Claims 1 to 9, characterized in that the filtering device (12) is fixed releasably on the fixing flange (16) with the aid of a screw collar ring (15) placed over the filter housing (13).

11. Liquid filter according to one of Claims 1 to 10, characterized in that the filtering device is designed as a box filter (12) which is sealed off by means of two radially acting sealing rings (24, 27) on two tubular stubs (22, 23) arranged concentrically on the fixing flange (16).

## Revendications

1. Filtre à liquide pour carburant de moteur Diesel dans le cas duquel un dispositif de filtration (12) est monté de façon amovible et étanche sur une tête de filtre (11), dispositif de filtration qui reçoit un élément de filtration (14) dans un boîtier de filtre (13) et que l'on peut brancher par ses orifices correspondant au côté sale et au côté propre dans une face frontale, entre un raccord d'arrivée (37) et un raccord de départ (38) de la tête de filtre (11), une pompe à main (33) ainsi qu'un dispositif électrique de chauffage (34) étant disposés dans la tête de filtre (11) avec les raccords électriques correspondants (35), et des moyens de fixation (19) étant constitués sur celle-ci pour monter le filtre à liquide (10) sur une partie constitutive d'un moteur,
caractérisé en ce que
la tête de filtre (11) consiste en une bride de fixation (16) présentant les moyens de fixation (19) et en un module de boîtier (17) monté dessus, en ce que le dispositif de chauffage (34), la pompe à main (33), les raccords d'arrivée (37) et de départ (38), ainsi que le raccord électrique (35), sont disposés dans le module de boîtier (17), et en ce que le dispositif de filtration (12) et le module de boîtier (17) sont montés indépendamment l'un de l'autre sur les côtés opposés de la bride de fixation (16) d'une manière amovible en constituant les liaisons de liquide, le module de boîtier (17) présentant un boîtier (39) sensiblement cylindrique sur la face frontale (42) duquel, à l'opposé du dispositif de filtration 12, la pompe à main (33) est disposée avec une membrane (46) alors que le boîtier (39) est fixé par son autre face frontale sur la bride de fixation (16), au moyen d'une liaison emboîtable constituée par la connexion (32) et le manchon de raccordement (31) adapté dessus, et en ce que les raccords pour le fluide et les raccords électriques (37, 38, 35) sont disposés radialement sur le boîtier cylindrique (39).

2. Filtre à liquide selon la revendication 1,
caractérisé en ce que
le diamètre extérieur du boîtier cylindrique (39) est sensiblement plus petit que le diamètre extérieur du boîtier du filtre (13).

3. Filtre à liquide selon la revendication 1 ou 2,
caractérisé en ce que
la bride de fixation (16) est en métal, en particulier en aluminium, et le boîtier (39) du module (17) est en matière plastique.

4. Filtre à liquide selon l'une des revendications 1 à 3,
caractérisé en ce que
l'on dispose un dispositif de dégazage (36) dans le module de boîtier (17).

5. Filtre à liquide selon la revendication 4,
caractérisé en ce que
le dispositif de dégazage (36) présente un flotteur (63) qui commande, en fonction de l'état du niveau de liquide dans le filtre (10), un canal de dégazage (62) pour l'ouvrir ou le fermer.

6. Filtre à liquide selon l'une des revendications 1 à 5,
caractérisé en ce que
la membrane (46) de la pompe à main (33) assure l'étanchéité vers l'extérieur d'une chambre remplie de liquide (43), et recouvre sensiblement toute la face frontale (42) du boîtier (39).

7. Filtre à liquide selon la revendication 6,
caractérisé en ce que
l'on dispose dans le boîtier (39) une cloison de séparation (41) se trouvant entre les deux faces frontales des soupapes d'admission et de refoulement (51, 52) associées à la pompe à main (33), parmi lesquelles la soupape d'admission (51) est associée à une chambre d'entrée (45) et la soupape de refoulement (52) est associée à une chambre de chauffage (44).

8. Filtre à liquide selon la revendication 7,
caractérisé en ce que
dans la chambre de chauffage (44) plusieurs éléments de chauffage PTC (55, 56) associés au dispositif de chauffage (34) sont maintenus dans le sens axial entre deux disques de contact métalliques (53, 54) qui sont en liaison opérationnelle avec les raccords électriques (35), tandis que, pour sa fixation, des nervures (58) maintenant sur le pourtour les éléments de chauffage (55, 56), sont disposées dans le sens radial, nervures (58) qui partent d'une plaque d'appui (59) disposée de façon solidaire du boîtier et qui passent axialement au moins à travers l'un des disques de contact (53, 54).

9. Filtre à liquide selon l'une ou plusieurs des revendications 1 à 8,
caractérisé en ce que
le raccord d'arrivée (37), le raccord de départ (38) et le raccord électrique (35) sont disposés, dans le module de boîtier (17), dans un même plan qui s'étend radialement par rapport à l'axe longitudinal du filtre (10), plan qui se trouve en particulier sensiblement au milieu entre les deux faces frontales du boîtier (39).

10. Filtre à liquide selon l'une des revendications 1 à 9,
caractérisé en ce que
le dispositif de filtration (12) est fixé de façon amovible sur la bride de fixation (16) à l'aide d'une bague d'accouplement (15) enfilée sur le boîtier du filtre (13).

11. Filtre à liquide selon l'une des revendications 1 à 10,
caractérisé en ce que
le dispositif de filtration est constitué sous la forme d'une cartouche de filtration (12) qui est montée de façon étanche au moyen de deux bagues d'étanchéité (24, 27) agissant radialement sur deux ajutages tubulaires (22, 23) disposés concentriquement sur la bride de fixation (16).
